(19) Europäisches Patentamt
European Patent Office
Office européen des brevets

(11) **EP 4 175 863 B1**

(12) **EUROPÄISCHE PATENTSCHRIFT**

(45) Veröffentlichungstag und Bekanntmachung des Hinweises auf die Patenterteilung:
**10.04.2024   Patentblatt 2024/15**

(21) Anmeldenummer: **21762388.3**

(22) Anmeldetag: **06.08.2021**

(51) Internationale Patentklassifikation (IPC):
***B61D 27/00*** (2006.01)

(52) Gemeinsame Patentklassifikation (CPC):
**B61D 27/00**

(86) Internationale Anmeldenummer:
**PCT/EP2021/072019**

(87) Internationale Veröffentlichungsnummer:
**WO 2022/053235 (17.03.2022 Gazette 2022/11)**

(54) **VERFAHREN ZUR BESTIMMUNG EINES FRISCHLUFT-VOLUMENSTROMS IN EINEM FAHRZEUG ZUR PERSONENBEFÖRDERUNG UND VORRICHTUNG ZUR DURCHFÜHRUNG DES VERFAHRENS**

METHOD FOR DETERMINING A FRESH AIR VOLUME FLOW IN A VEHICLE FOR TRANSPORTING PEOPLE, AND DEVICE FOR CARRYING OUT THE METHOD

PROCÉDÉ DE DÉTERMINATION D'UN DÉBIT VOLUMIQUE D'AIR FRAIS DANS UN VÉHICULE POUR LE TRANSPORT DE PERSONNES, ET DISPOSITIF PERMETTANT DE METTRE EN OEUVRE LE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2020   DE 102020211304**

(43) Veröffentlichungstag der Anmeldung:
**10.05.2023   Patentblatt 2023/19**

(73) Patentinhaber: **Siemens Mobility GmbH
81739 München (DE)**

(72) Erfinder:
• **HILDEBRANDT, Alexander
44789 Bochum (DE)**
• **REISS, Gerhard
47802 Krefeld (DE)**

(74) Vertreter: **Siemens Patent Attorneys
Postfach 22 16 34
80506 München (DE)**

(56) Entgegenhaltungen:
EP-A1- 3 326 850          WO-A1-02/074600
DE-A1- 4 333 173          DE-A1-102007 056 356
DE-A1-102010 048 340

**Beschreibung**

Die Erfindung bezieht sich auf ein Verfahren zur Bestimmung eines Frischluft-Volumenstroms in einem Fahrzeug zur Personenbeförderung sowie auf eine Vorrichtung zur Durchführung eines solchen Verfahrens.

Beispielsweise für Schienenfahrzeuge definiert die EU-Verordnung Nr.1302/2014 ("TSI Loc/Pas") Anforderungen an eine Luftqualität im Inneren des Fahrzeugs, wobei speziell ein maximal zulässiger Gehalt an Kohlenstoffdioxid einzuhalten ist. In den einschlägigen europäischen Normen zum klimatechnischen Komfort in Schienenfahrzeugen, wie EN 14813, EN 14750 und EN 13129, werden explizit Frischluft-Volumenströme genannt, die pro Fahrgast einzuhalten sind. Diese Anforderungen werden in Kundenlastenheften aufgegriffen. Folglich sind messtechnische Nachweise zur Einhaltung der geforderten Luftqualität bzw. Frischluft-Volumenströme insbesondere in Schienenfahrzeugen unerlässlich.

Zur Messung eines Frischluft-Volumenstroms ist es bekannt, von außen auf vorgesehene Frischluftöffnungen des Klimatisierungssystems sog. Volumenstrommesshauben aufzusetzen. In diesem Fall wird diese Messtechnik für den erforderlichen Nachweis verwendet. Allerdings ist der Einsatz von Volumenstrommesshauben nicht bei allen Fahrzeugen möglich.

Bei verdeckten Frischluftöffnungen, bei Fahrt oder wenn Undichtigkeiten des Fahrzeugs in den Nachweis einzubeziehen sind, sind sog. Tracergas-Messungen (auch als Spurengasmessung oder Indikatorgasmessung bezeichnet) durchzuführen.

Bei der Tracergas-Messung wird ein definierter Tracergas-Massenstrom in den Fahrgastinnenraum des Fahrzeugs eingeleitet.

Der Frischluft-Volumenstrom und der Abluftmassenstrom reduzieren eine Tracergas-Konzentration durch die Spülung des Fahrgastinnenraums. Nach Erreichen einer quasistationären Tracergas-Konzentration kann der Frischluft-Volumenstrom unter der Annahme, dass der Frischluft-Volumenstrom gleich dem Abluftvolumenstrom ist, aus der Massenbilanz des Tracer-Gases berechnet werden. Unter dem Begriff "quasistationär" wird verstanden, dass das Ergebnis der Bestimmung des Frischluft-Volumenstroms im eingeschwungenen Zustand innerhalb eines Toleranzbandes von +/- 10% (um den aktuellen Mittelwert) vorzugsweise +/- 5% bleibt.

Bei einem anderen Verfahren, siehe Dokument DE 43 33 173 A1, werden die Luftfeuchte im Fahrgastinnenraum überwacht und der Frischluft-Volumenstrom nach Erreichen einer quasi-stationären Luftfeuchte im Fahrgastinnenraum in Abhängigkeit von der Anzahl der Menschen im Raum berechnet.

Der aktuell herrschende Frischluft-Volumenstrom kann aus dem Frischluft-Massenstrom unter Verwendung der Dichte berechnet werden.

Für die Verwendung als Tracergas kommt wegen seiner Nichtbrennbarkeit Kohlendioxid zum Einsatz. Allerdings ist Kohlenstoffdioxid als risikobehaftet einzustufen, denn der Mensch und damit auch etwaiges Messpersonal, kann Kohlenstoffdioxid nicht riechen oder schmecken. Bei Unfällen im Umgang mit Kohlendioxid besteht möglicherweise Lebensgefahr. Aus diesen Gründen sind bei der Verwendung von Kohlenstoffdioxid als Tracergas für eine Messung des Frischluft-Volumenstroms vielfältige Sicherheitsvorschriften zu beachten. Insbesondere ein Aufenthalt des Messpersonals in einem mit Kohlendioxid beaufschlagten Fahrgastinnenraum ist gefährlich. Im Einzelnen erfordert die Frischluft-Volumenstrommessung mit Hilfe von Kohlendioxid als Tracergas folgende temporäre Ausrüstung:

- Sichere Lager- und Transportgestelle für Kohlendioxid-Druckflaschen (aufrechtstehend),
- Halterung für die in Benutzung befindlichen Druckflaschen,
- Kohlendioxid,
- Gas-Vorwärmer,
- Druckminderer,
- rechnergesteuertes Regelventil für den Kohlendioxidmassestrom,
- Kohlendioxid-Sensoren zur Messung des Kohlenstoffdioxidgehalts im Raum,
- Kohlendioxid-Sensoren zur Messung des Kohlenstoffdioxidgehalts in der Außenluft,
- Steuerungs- und Auswertesoftware.

Vor diesem Hintergrund liegt der Erfindung die Aufgabe zugrunde, eine Frischluft-Volumenstrommessung in einem Fahrzeug zur Personenbeförderung insbesondere hinsichtlich des messtechnischen Aufwands zur Durchführung von Tracermessungen aufwandsärmer zu gestalten.

Diese Aufgabe wird hinsichtlich des Verfahrens gelöst durch ein Verfahren mit den Merkmalen des Anspruchs 1.

Vorgesehen ist danach ein Verfahren zur Bestimmung eines Frischluft-Volumenstroms in einem Fahrzeug zur Personenbeförderung, mit den Schritten:

a) Einleiten oder Erzeugen eines definierten Wasserdampf-Massenstroms in einen/einem Fahrgastinnenraum des Fahrzeugs,
b) Überwachen einer Luftfeuchte im Fahrgastinnenraum des Fahrzeugs und
c) nach Erreichen einer quasistationären Luftfeuchte im Fahrgastinnenraum, Berechnen des Frischluft-Volumenstroms nach folgender Gleichung:

$$\dot{V}_{fr} = \frac{\dot{m}_{ev} + n \cdot \dot{m}_p}{\rho_{fr} \cdot x_{fr} - \rho_i \cdot x_i}$$

mit

$\dot{V}_{fr}$    Frischluft-Volumenstrom [m$^3$/h]

$\dot{m}_{ev}$    Masse des verdampften Wassers im Innenraum [kg/h]

$n$    Anzahl der Menschen im Raum

$\dot{m}_p$    von einer Person abgegebener Wasser-Massestrom [kg/h]

$\rho_{fr}$    Dichte der Frischluft (feuchte Luft) [kg/m³]

$x_{fr}$    spezifische Luftfeuchtigkeit der Frischluft [kg/kg]

$\rho_i$    Dichte der Raumluft (feuchte Luft) [kg/m³]

$x_i$    spezifische Luftfeuchtigkeit der Raumluft [kg/kg].

Ein wesentlicher Unterschied zum im Stand der Technik bekannten Verfahren zur Messung eines Frischluft-Volumenstroms besteht darin, dass nach der hier vorgestellten technischen Lehre Wasserdampf als Tracergas zum Einsatz kommt. Dadurch entfällt eine Vielzahl der oben aufgeführten Sicherheitsmaßnahmen, die bei der Verwendung von Kohlendioxid erforderlich sind.

Bei der Bestimmung des Frischluft-Volumenstroms unter Verwendung von Wasserdampf als Tracergas wird bevorzugt eine definierter, durch Wägung bestimmter Wasserdampf-Massenstrom in den Fahrgastinnenraum eingeleitet oder unmittelbar im Fahrgastinnenraum erzeugt.

Sofern sich Personen (Messpersonal) im Fahrgastinnenraum während der Durchführung der Messung aufhalten, muss ihre Wasserabgabe berücksichtigt werden. Dabei ergibt sich der von einer Person abgegebene Wasser-Massestrom aus dem Quotienten von latenter Wärmeabgabe des Menschen und spezifischer Verdampfungsenthalpie des Wassers. Die latente Wärmeabgabe des Menschen, normal bekleidet und sitzend, kann den Klimakomfortnormen für Schienenfahrzeuge (EN 14813, EN 14750 oder EN 13129) entnommen werden. Insofern ist der Wert für einen von einer Person abgegebenen Wassermassestrom $\dot{m}_p$ ein vorgegebener, nicht aber ein gemessener Wert.

Mit dem Frischluft-Volumenstrom wird ein weiterer Wasserdampf-Massenstrom in den Fahrgastinnenraum eingeleitet. Dabei wird bevorzugt etwaige Leckageluft als zusätzliche Frischluft aufgefasst.

Der mit der Fortluft aus dem Fahrgastinnenraum abgeführte Wasserdampf-Massenstrom reduziert die spezifische Luftfeuchtigkeit im Innenraum. Nach einer gewissen Zeit wird eine quasistationäre Luftfeuchte im Fahrgastinnenraum erreicht, wonach dann mit Hilfe der oben angegebenen Gleichung ein Berechnungswert für den Frischluft-Volumenstrom erhalten werden kann.

Bevorzugt kann die spezifische Luftfeuchtigkeit der Frischluft und/oder die spezifische Luftfeuchtigkeit der Raumluft über Feuchtesensoren einer Klimaanlage des Fahrzeugs bestimmt werden. Alternativ ist es möglich, dass die spezifische Luftfeuchtigkeit der Frischluft und/oder die spezifische Luftfeuchtigkeit der Raumluft jeweils über Sensoren für eine Lufttemperatur und eine Feuchtkugeltemperatur bestimmt werden.

Die oben angegebene Aufgabe wird hinsichtlich der Vorrichtung gelöst durch eine Vorrichtung mit den Merkmalen des Anspruchs 6.

Danach ist eine Vorrichtung zur Bestimmung eines Frischluft-Volumenstroms in einem Fahrzeug zur Personenbeförderung vorgesehen, mit

- einem Wasserreservoir zum Einleiten oder Erzeugen eines definierten Wasserdampf-Massenstroms in einen/einem Fahrgastinnenraum des Fahrzeugs,
- einer Überwachungsvorrichtung für eine Luftfeuchte im Fahrgastinnenraum des Fahrzeugs und
- einer Berechnungseinheit, die nach Erreichen einer quasi-stationären Luftfeuchte im Fahrgastinnenraum den Frischluft-Volumenstrom nach folgender Gleichung berechnet:

$$\dot{V}_{fr} = \frac{\dot{m}_{ev} + n \cdot \dot{m}_p}{\rho_{fr} \cdot x_{fr} - \rho_i \cdot x_i}$$

mit

$\dot{V}_{fr}$    Frischluft-Volumenstrom [m³/h]

$\dot{m}_{ev}$    Masse des verdampften Wassers im Innenraum [kg/h]

$n$    Anzahl der Menschen im Raum

$\dot{m}_p$    von einer Person abgegebener Wasser-Massestrom [kg/h]

$\rho_{fr}$    Dichte der Frischluft (feuchte Luft) [kg/m³]

$x_{fr}$    spezifische Luftfeuchtigkeit der Frischluft [kg/kg]

$\rho_i$    Dichte der Raumluft (feuchte Luft) [kg/m³]

$x_i$    spezifische Luftfeuchtigkeit der Raumluft [kg/kg].

Das vorgesehene Wasserreservoir umfasst bevorzugt ein Heizgerät zur Wasserverdunstung und eine Wägezelle, die bevorzugt im Luftstrom der Einluft angeordnet sind.

Bevorzugt wird folgende Ausrüstung zur Messung des Frischluft-Volumenstroms in einem Fahrzeug zur Personenbeförderung eingesetzt:

- Heizvorrichtung mit Wassergefäß,
- Waage,
- Temperatursensor(en) zur Bestimmung der Lufttemperatur im Fahrgastinnenraum,
- Luftfeuchtesensor(en) zur Bestimmung der Luftfeuchte im Fahrgastinnenraum,
- Temperatursensor(en) zur Bestimmung der Außentemperatur (Frischluft),
- Luftfeuchtesensor(en) zur Bestimmung der Außenfeuchte (Frischluft),
- Waage zur Bestimmung der verdampften Wassermenge,
- Auswertesoftware.

Für eine Zuverlässigkeit des Berechnungswertes für den Frischluft-Volumenstrom ist es wichtig, eine etwaige Kondensation des Wasserdampfs im Fahrzeug (z.B. an Wagenumschlie-ßungsflächen und Kanälen) zu vermeiden, denn sie verfälscht die Massenbilanz und somit auch das Berechnungsergebnis. In modernen Schienenfahrzeugen ist jedoch die Wahrscheinlichkeit der Kondensation von Wasserdampf im Fahrzeug gering, weil diese in der Regel gut gedämmt sind. Zudem lässt sich eine Taupunktunterschreitung durch geeignete Wahl einer höheren Innenraumtemperatur vermeiden. Auch lässt sich eine Kondensation von Wasserdampf ggf. bei der Berechnung des Frischluft-Volumenstrom durch Korrekturfaktoren ausgleichen.

Es ist hervorzuheben, dass Wasser leicht verfügbar ist, und zwar zu niedrigsten Preisen. Bei den erforderlichen Nachweismessungen gehen von Wasser und Wasserdampf keinerlei Gefahren aus. Eine Bestimmung des Wassermassestroms ist mittels Wägung sehr genau, insbesondere verglichen mit einem Kohlenstoffdioxid-Volumenstrom. Ebenso ist eine Dosierung beim Wasserdampf einfach und skalierbar.

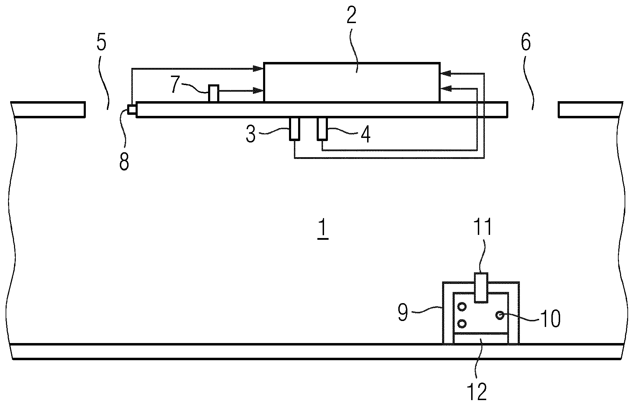

Ein Ausführungsbeispiel der Erfindung wird nachfolgend unter Bezugnahme auf die Zeichnung noch näher erläutert. Die einzige Figur zeigt eine schematische Darstellung einer Klimaanordnung eines Schienenfahrzeugs.

Die Figur zeigt einen Längsabschnitt eines Wagenkastens eines Schienenfahrzeugs, das als Beispiel für ein Fahrzeug zur Personenbeförderung herangezogen wird. Ein Fahrgastinnenraum 1 des Schienenfahrzeugs wird mittels einer Klimaanlage 2 mit konditionierter Zuluft versorgt.

Angaben über aktuell herrschende klimatische Bedingungen werden der Klimaanlage 2 über eine Anzahl von Sensoren zur Verfügung gestellt. Für die Innenraumluft, die sich in dem Fahrgastinnenraum 1 befindet, sind ein Temperatursensor 3 und ein Feuchtesensor 4 zur Bestimmung der spezifischen Luftfeuchtigkeit der Raumluft $x_i$ vorgesehen.

Zur Beaufschlagung des Fahrgastinnenraums 1 mit konditionierter Zuluft fördert die Klimaanlage 2 mittels eines Frischluft-Lüfters (nicht dargestellt) Frischluft von außerhalb des Fahrzeugs durch eine Frischluftöffnung 5 in den Fahrgastinnenraum 1. Zudem steuert die Klimaanlage 2 einen Fortluft-Lüfter (nicht dargestellt), der aus dem Fahrgastinnenraum 1 stammende Raumluft durch eine Fortluft-Öffnung 6 nach außerhalb des Fahrzeugs fördert.

Zur Bestimmung der klimatischen Parameter der einzuleitenden Frischluft umfasst die Klimaanordnung einen Außentemperatursensor 7 sowie einen im Bereich der Einlassöffnung 5 für Frischluft angeordneten Feuchtesensor 8, mit dessen Hilfe der spezifischen Luftfeuchtigkeit der Frischluft $x_{fr}$ bestimmbar ist.

Sämtliche Sensoren, nämlich der Sensor für die Innen-Temperatur 3, die Innen-Luftfeuchte 4, die Außentemperatur 5 und die Außenfeuchte 8 stehen in signaltechnischer Verbindung zur Klimaanlage 2. Diese wertet die von den Sensoren 3, 4, 7, 8 gelieferten Messwerte für eine Bestimmung eines Frischluft-Volumenstroms aus.

Zum Erbringen eines messtechnischen Nachweises, dass der Frischluft-Volumenstrom den einschlägigen Normen für den Betrieb eines Fahrzeugs zur Personenbeförderung, hier beispielshalber eines Schienenfahrzeugs, genügt, wird die vorstehend beschriebene Klimaanordnung um ein Wasserreservoir 9 ergänzt, das im dargestellten Ausführungsbeispiel im Fahrgastinnenraum 1, insbesondere im Luftstrom der Einluft, angeordnet ist. Im Inneren des Wasserreservoirs 9 ist eine Heizvorrichtung 10 vorgesehen, die als Tauchsieder ausgeführt sein kann. Das Wasserreservoir 9 ist mit einem Auslassventil 11 ausgestattet, um definiert und dosiert Wasserdampf in den Fahrgastinnenraum 1 des Schienenfahrzeugs einzuleiten. Zudem ist das Wasserreservoir 9 mit einer Wägezelle 12 ausgestattet, so dass messtechnisch festgestellt werden kann, wieviel Wassermasse im Zuge eines Messvorgangs für den Frischluft-Volumenstrom verdampft und in den Fahrgastinnenraum 1 eingeleitet worden ist.

Bei kombiniertem Einsatz der oben beschriebene Klimaanordnung und dem Wasserreservoir 9 in einer Vorrichtung zur Bestimmung eines Frischluft-Volumenstroms in einem Fahrzeug zur Personenbeförderung ist es möglich, den Frischluft-Volumenstrom über folgende Gleichung zu ermitteln:

$$\dot{V}_{fr} = \frac{\dot{m}_{ev} + n \cdot \dot{m}_p}{\rho_{fr} \cdot x_{fr} - \rho_i \cdot x_i}$$

mit

$\dot{V}_{fr}$     Frischluft-Volumenstrom [m³/h]

$\dot{m}_{ev}$     Masse des verdampften Wassers im Innenraum [kg/h]

$n$     Anzahl der Menschen im Raum

$\dot{m}_p$     von einer Person abgegebener Wasser-Massestrom [kg/h]

$\rho_{fr}$     Dichte der Frischluft (feuchte Luft) [kg/m³]

$x_{fr}$     spezifische Luftfeuchtigkeit der Frischluft [kg/kg]

$\rho_i$     Dichte der Raumluft (feuchte Luft) [kg/m³]

$x_i$     spezifische Luftfeuchtigkeit der Raumluft [kg/kg].

Dabei ist der Wert für einen von einer Person abgegebenen Wasser-Massestrom $\dot{m}_p$ ein vorgegebener Wert, der einschlägigen Normen entnommen werden kann. Über etwaige Leckagen des Fahrzeugs in den Fahrgastinnenraum 1 eintretende Luft wird bei der Berechnung des Frischluft-Volumenstroms als weitere Frischluft aufgefasst.

Im dargestellten Ausführungsbeispiel wird die spezifische Luftfeuchtigkeit der Frischluft $x_{fr}$ und die spezifische Luftfeuchtigkeit der Raumluft $x_i$ die Feuchtesensoren 4, 8 der Klimaanlage 2 ermittelt. Alternativ (nicht dargestellt) ist es auch möglich, die spezifische Luftfeuchtigkeit der Frischluft $x_{fr}$ und/oder die spezifische Luftfeuchtigkeit der Raumluft $x_i$ jeweils über Sensoren für eine Lufttemperatur und eine Feuchtkugeltemperatur zu bestimmen. Die Feuchtkugeltemperatur kann beispielsweis mittels eines Lufttemperatursensors ermittelt werden, der über einen Baumwollstrumpf befeuchtet wird.

Die Bestimmung des Frischluft-Volumenstroms über die vorstehende Gleichung erfolgt erst dann, wenn sich im Fahrgastinnenraum 1 eine quasistationäre Luftfeuchte eingestellt hat.

Es ist hervorzuheben, dass im vorliegenden Ausführungsbeispiel die Klimaanlage die Funktion einer Überwachungsvorrichtung für eine Luftfeuchte im Fahrgastinnenraum 1 des Fahrzeugs und auch eine Berechnungseinheit für die Bestimmung des Frischluft-Volumenstroms übernimmt und auch die erforderliche Auswertesoftware auf der Klimaanlage ausgeführt wird. Es wird darauf hingewiesen, dass diese Funktionen nicht notwendigerweise von der Klimaanlage übernommen werden müssen.

**Patentansprüche**

1. Verfahren zur Bestimmung eines Frischluft-Volumenstroms in einem Fahrzeug zur Personenbeförderung, mit den Schritten:

    a) Einleiten oder Erzeugen eines definierten Wasserdampf-Massenstroms in einen/einem Fahrgastinnenraum (1) des Fahrzeugs,
    b) Überwachen einer Luftfeuchte im Fahrgastinnenraum (1) des Fahrzeugs und
    c) nach Erreichen einer quasistationären Luftfeuchte im Fahrgastinnenraum (1), Berechnen des Frischluft-Volumenstroms nach folgender Gleichung:

    $$\dot{V}_{fr} = \frac{\dot{m}_{ev} + n \cdot \dot{m}_p}{\rho_{fr} \cdot x_{fr} - \rho_i \cdot x_i}$$

    mit

    $\dot{V}_{fr}$ Frischluft-Volumenstrom [m³/h]
    $\dot{m}_{ev}$ Masse des verdampften Wassers im Innenraum [kg/h]
    $n$ Anzahl der Menschen im Raum
    $\dot{m}_p$ von einer Person abgegebener Wasser-Massestrom [kg/h]
    $\rho_{fr}$ Dichte der Frischluft (feuchte Luft) [kg/m³]
    $x_{fr}$ spezifische Luftfeuchtigkeit der Frischluft [kg/kg]
    $\rho_i$ Dichte der Raumluft (feuchte Luft) [kg/m³]
    $x_i$ spezifische Luftfeuchtigkeit der Raumluft [kg/kg].

2. Verfahren nach Anspruch 1,
    **dadurch gekennzeichnet, dass**
    der Wert für einen von einer Person abgegebenen

Wasser-Massestrom $\dot{m}_p$ ein vorgegebener Wert ist.

3. Verfahren nach Anspruch 1 oder 2,
    **dadurch gekennzeichnet, dass**
    über Leckagen des Fahrzeugs in den Fahrgastinnenraum (1) eintretende Luft als weitere Frischluft aufgefasst wird.

4. Verfahren nach einem der Ansprüche 1 bis 3,
    **dadurch gekennzeichnet, dass**
    die spezifische Luftfeuchtigkeit der Frischluft $x_{fr}$ und/oder die spezifische Luftfeuchtigkeit der Raumluft $x_i$ über Feuchtesensoren ggf. der Klimaanlage (2) des Fahrzeugs bestimmt werden.

5. Verfahren nach einem der Ansprüche 1 bis 3,
    **dadurch gekennzeichnet, dass**
    die spezifische Luftfeuchtigkeit der Frischluft $x_{fr}$ und/oder die spezifische Luftfeuchtigkeit der Raumluft $x_i$ jeweils über Sensoren für eine Lufttemperatur und eine Feuchtkugeltemperatur bestimmt werden

6. Vorrichtung zur Bestimmung eines Frischluft-Volumenstroms in einem Fahrzeug zur Personenbeförderung, mit

    - einem Wasserreservoir (9) zum Einleiten oder Erzeugen eines definierten Wasserdampf-Massenstroms in einen/einem Fahrgastinnenraum (1) des Fahrzeugs,
    - eine Überwachungsvorrichtung für eine Luftfeuchte im Fahrgastinnenraum (1) des Fahrzeugs und
    - eine Berechnungseinheit, die nach Erreichen einer quasistationären Luftfeuchte im Fahrgastinnenraum (1) den Frischluft-Volumenstrom nach folgender Gleichung berechnet:

    $$\dot{V}_{fr} = \frac{\dot{m}_{ev} + n \cdot \dot{m}_p}{\rho_{fr} \cdot x_{fr} - \rho_i \cdot x_i}$$

    mit

    $\dot{V}_{fr}$ Frischluft-Volumenstrom [m³/h]
    $\dot{m}_{ev}$ Masse des verdampften Wassers im Innenraum [kg/h]
    $n$ Anzahl der Menschen im Raum
    $\dot{m}_p$ von einer Person abgegebener Wasser-Massestrom [kg/h]
    $\rho_{fr}$ Dichte der Frischluft (feuchte Luft) [kg/m³]
    $x_{fr}$ spezifische Luftfeuchtigkeit der Frischluft [kg/kg]
    $\rho_i$ Dichte der Raumluft (feuchte Luft) [kg/m³]
    $x_i$ spezifische Luftfeuchtigkeit der Raumluft [kg/kg]

7. Vorrichtung nach Anspruch 6,

**dadurch gekennzeichnet, dass**
das Wasserreservoir (9) ein Heizgerät (10) zur Wasserverdunstung und eine Wägezelle (12) umfasst.

8. Vorrichtung nach Anspruch 6 oder 7,
**dadurch gekennzeichnet, dass**
sie zur Bestimmung der spezifischen Luftfeuchtigkeit der Frischluft $x_{fr}$ und/oder der spezifischen Luftfeuchtigkeit der Raumluft $x_i$ Feuchtesensoren (4, 8) umfasst.

9. Vorrichtung nach einem der Ansprüche 6 bis 7,
**dadurch gekennzeichnet, dass**
sie zur Bestimmung der spezifischen Luftfeuchtigkeit der Frischluft $x_{fr}$ und/oder der spezifischen Luftfeuchtigkeit der Raumluft $x_i$ jeweils einen Sensor für eine Lufttemperatur und eine Feuchtkugeltemperatur umfasst.

**Claims**

1. Method for determining a fresh air volume flow in a vehicle for transporting people, comprising the steps:

    a) introducing or generating a defined water vapor mass flow into/in a passenger compartment (1) of the vehicle,
    b) monitoring an air humidity in the passenger compartment (1) of the vehicle, and
    c) after a quasi-stationary air humidity has been reached in the passenger compartment (1), calculating the fresh air volume flow according to the following equation:

$$\dot{V}_{fr} = \frac{\dot{m}_{ev} + n \cdot \dot{m}_p}{\rho_{fr} \cdot x_{fr} - \rho_i \cdot x_i}$$

    with

    $\dot{V}_{fr}$ fresh air volume flow [m³/h]
    $\dot{m}_{ev}$ mass of the evaporated water in the interior [kg/h]
    $n$ number of people in the compartment
    $\dot{m}_p$ water mass flow given off by a person [kg/h]
    $\rho_{fr}$ density of the fresh air (humid air) [kg/m³]
    $x_{fr}$ specific air humidity of the fresh air [kg/kg]
    $\rho_i$ density of the compartment air (humid air) [kg/m³]
    $x_i$ specific air humidity of the compartment air [kg/kg].

2. Method according to Claim 1,
**characterized in that**
the value of a water mass flow $\dot{m}_p$ given off by a person is a predetermined value.

3. Method according to Claim 1 or 2,
**characterized in that**
air entering the passenger compartment (1) through leaks of the vehicle is regarded as further fresh air.

4. Method according to one of Claims 1 to 3,
**characterized in that**
the specific air humidity $x_{fr}$ of the fresh air and/or the specific air humidity $x_i$ of the compartment air are determined by means of moisture sensors, optionally of the air conditioning system (2) of the vehicle.

5. Method according to one of Claims 1 to 3,
**characterized in that**
the specific air humidity $x_{fr}$ of the fresh air and/or the specific air humidity $x_i$ of the compartment air are respectively determined by means of sensors for an air temperature and a wet bulb temperature.

6. Device for determining a fresh air volume flow in a vehicle for transporting people, comprising

    - a water reservoir (9) for introducing or generating a defined water mass flow into/in a passenger compartment (1) of the vehicle,
    - a monitoring device for an air humidity in the passenger compartment (1) of the vehicle and
    - a calculation unit which, after a quasi-stationary air humidity has been reached in the passenger compartment (1), calculates the fresh air volume flow according to the following equation:

$$\dot{V}_{fr} = \frac{\dot{m}_{ev} + n \cdot \dot{m}_p}{\rho_{fr} \cdot x_{fr} - \rho_i \cdot x_i}$$

    with

    $\dot{V}_{fr}$ fresh air volume flow [m³/h]
    $\dot{m}_{ev}$ mass of the evaporated water in the interior [kg/h]
    $n$ number of people in the compartment
    $\dot{m}_p$ water mass flow given off by a person [kg/h]
    $p_{fr}$ density of the fresh air (humid air) [kg/m³]
    $x_{fr}$ specific air humidity of the fresh air [kg/kg]
    $\rho_i$ density of the compartment air (humid air) [kg/m³]
    $x_i$ specific air humidity of the compartment air [kg/kg].

7. Device according to Claim 6,
**characterized in that**
the water reservoir (9) comprises a heater (10) for the water vaporization and a weighing cell (12).

8. Device according to Claim 6 or 7,
**characterized in that**
it comprises moisture sensors (4, 8) for determining the specific air humidity $x_{fr}$ of the fresh air and/or the specific air humidity $x_i$ of the compartment air.

9. Device according to one of Claims 6 to 7, **characterized in that**
it respectively comprises a sensor for an air temperature and a wet bulb temperature for determining the specific air humidity $x_{fr}$ of the fresh air and/or the specific air humidity $x_i$ of the compartment air.

**Revendications**

1. Procédé de détermination du courant en volume d'air frais dans un véhicule du transport des personnes, comprenant les stades :

    a) envoi ou production d'un courant massique défini de vapeur d'eau dans un espace (1) intérieur réservé aux passagers du véhicule,
    b) contrôle de l'humidité de l'air dans l'espace (1) intérieur réservé aux passagers du véhicule et
    c) après obtention d'une humidité de l'air quasiment constante dans l'espace (1) intérieur réservé aux passagers, calcul du courant en volume d'air frais selon l'équation suivante :

$$\dot{V}_{fr} = \frac{\dot{m}_{ev} + n \cdot \dot{m}_p}{\rho_{fr} \cdot x_{fr} - \rho_i \cdot x_i}$$

dans laquelle

    $\dot{V}_{fr}$ courant en volume d'air frais [m³/h]
    $\dot{m}_{ev}$ masse de l'eau évaporée dans l'espace intérieur [kg/h]
    $n$ nombre de personnes dans l'espace
    $\dot{m}_p$ courant massique d'eau donné par une personne [kg/h]
    $\rho_{fr}$ masse volumique de l'air frais (air humide) [kg/m³]
    $x_{fr}$ humidité spécifique de l'air frais [kg/kg]
    $\rho_i$ masse volumique de l'air de l'espace (air humide) [kg/m³]
    $x_i$ humidité spécifique de l'air de l'espace [kg/kg].

2. Procédé suivant la revendication 1, **caractérisé en ce que**
la valeur pour un courant $\dot{m}_p$ massique d'eau donnée par une personne est une valeur donnée à l'avance.

3. Procédé suivant la revendication 1 ou 2, **caractérisé en ce que**
l'on relève, comme autre air frais, de l'air entrant par des fuites du véhicule dans l'espace (1) réservé aux passagers.

4. Procédé suivant l'une des revendications 1 à 3, **caractérisé en ce que**
l'on détermine l'humidité spécifique de l'air $x_{fr}$ frais et/ou l'humidité spécifique de l'air $x_i$ de l'espace par des capteurs d'humidité, le cas échéant de l'installation (2) de conditionnement d'air du véhicule.

5. Procédé suivant l'une des revendications 1 à 3, **caractérisé en ce que**
l'on détermine l'humidité spécifique de l'air $x_{fr}$ frais et/ou l'humidité spécifique de l'air $x_i$ de l'espace respectivement par des capteurs d'une température de l'air et une température de palier humide.

6. Installation de détermination d'un courant en volume d'air frais dans un véhicule du transport des personnes, comprenant :

    - un réservoir (9) d'eau pour envoyer ou produire un courant massique défini de vapeur d'eau dans un espace (1) intérieur réservé aux passagers du véhicule,
    - un dispositif de contrôle d'une humidité de l'air dans l'espace (1) intérieur réservé aux passagers du véhicule, et
    - une unité de calcul, qui, après qu'une humidité de l'air quasi constante est atteinte dans l'espace (1) intérieur réservé aux passages, calcule le courant en volume d'air frais selon l'équation suivante :

$$\dot{V}_{fr} = \frac{\dot{m}_{ev} + n \cdot \dot{m}_p}{\rho_{fr} \cdot x_{fr} - \rho_i \cdot x_i}$$

dans laquelle

    $\dot{V}_{fr}$ courant en volume d'air frais [m³/h]
    $\dot{m}_{ev}$ masse de l'eau évaporée dans l'espace intérieur [kg/h]
    $n$ nombre de personnes dans l'espace
    $\dot{m}_p$ courant massique d'eau donné par une personne [kg/h]
    $\rho_{fr}$ masse volumique de l'air frais (air humide) [kg/m³]
    $x_{fr}$ humidité spécifique de l'air frais [kg/kg]
    $\rho_i$ masse volumique de l'air de l'espace (air humide) [kg/m³]
    $x_i$ humidité spécifique de l'air de l'espace [kg/kg].

7. Installation suivant la revendication 6, **caractérisée en ce que**
le réservoir (9) d'eau comprend un appareil (10) de chauffage pour l'évaporation de l'eau et une cellule (12) de pesage.

8. Installation suivant la revendication 6 ou 7, **caractérisée en ce qu'**

elle comprend des capteurs (4, 8) d'humidité pour la détermination de l'humidité spécifique de l'air $x_{fr}$ frais et/ou de l'humidité spécifique de l'air $x_i$ de l'espace.

9. Installation suivant l'une des revendications 6 ou 7, **caractérisée en ce qu'**
elle comprend, pour la détermination de l'humidité spécifique de l'air $x_{fr}$ frais et/ou de l'humidité de l'air $x_i$ de l'espace, respectivement un capteur d'une température de l'air et/ou un capteur de la température de roulement humide.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4333173 A1